# EUROPEAN PATENT APPLICATION

(11) **EP 0 969 030 A1**
(43) Date of publication of application: **05.01.2000**
(21) Application number: 99110012.4
(22) Date of filing: 21.05.1999
(51) Int. Cl.: C08G 59/40, C09D 163/00

(54) **Novel epoxy - amine coating compositions**

(30) Priority: 01.07.1998 US 108497
(71) Applicant: BASF CORPORATION, Mount Olive, New Jersey 07828-1234 (US)
(72) Inventor: Tye, Anthony J., Waterville, OH 43566 (US)
(74) Representative: Fitzner, Uwe, Dr.

(57) **Abstract**

Accordingly, the invention described herein relates to a low VOC epoxy based coating utilizing the following essential components:
1. An epoxy functional resin component where the average epoxide functionality is >1.
2. An aliphatic amine or aliphatic blocked amine functional component where the amine functionality is >1. This includes polyamidoamines, polyamines, ketimines and aldimines.
3. An acetoacetonate functional oligomer where the molecular weight is < 1000 and the acetoacetonate functionality is >1.
4. Optionally other components that typically constitute a complete coatings system such as pigments, catalysts, additives, plasticizers, etc.

This is typically a three-package system however, with modification, it can become a two-package system.

## Description

### BACKGROUND OF THE INVENTION

In the current environment of regulations intended to reduce the amount of volatile organic compounds (or VOC) that are released into the atmosphere on application of coatings, it is very difficult to formulate coating compositions that meet the regulatory limits without some kind of crosslinking mechanism that takes place after application. In order to achieve a suitable spray application viscosity (20-30 seconds #4 Ford cup @20°C) as VOC regulations have mandated higher application non-volatiles it has been necessary to use resins with lower molecular weights and generally lower Tg. Both of these changes generally have the effect of lengthening the dry time of the applied coating since the number of crosslink reactions required to achieve a 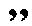 dry to handle" condition increases significantly. Epoxy/amine coatings systems are well known in the art as a class of coatings that is useful as a primer. A low VOC epoxy/amine system may be achieved through the use of low molecular weight epoxy resins and optionally the use of low molecular weight polyamines, polyketimines or polyaldimines. Health concerns are raised when considering the use of a low molecular weight epoxy resin, which may, depending on the application, preclude its use. The present invention effectively reduces the VOC of epoxy/amine coating systems without resorting to use of low molecular weight epoxides.

This invention also describes a method to reduce the volatile organic content (VOC) of a paint composition by increasing the solids of a paint composition without adversely affecting the sprayable viscosity of the paint and also without significantly decreasing the durability or performance of the final paint film so produced.

### SUMMARY OF THE INVENTION

Accordingly, the invention described herein relates to a low VOC epoxy based coating utilizing the following essential components:
1. An epoxy functional resin component where the average epoxide functionality is
   >1.
2. An aliphatic amine or aliphatic blocked amine functional component where the
   amine functionality is >1. This includes polyamidoamines, polyamines, ketimines
   and aldimines.
3. An acetoacetonate functional oligomer where the molecular weight is < 1000 and
   the acetoacetonate functionality is ≥ 1.
4. Optionally other components that typically constitute a complete coatings system
   such as pigments. catalysts, additives, plasticizers, etc.
This is typically a three-package system however, with modification, it can become a two-package system.
The low molecular weight polyacetoacetonate component can be prepared by various methods, the preferred method being transesterification of a polyol, such as ethylene glycol or preferably glycerine, with t-butylacetoacetonate, and then distilling off t-butanol as a by-product.

### DETAILED DESCRIPTION

Accordingly, the invention described herein relates to a low VOC epoxy based coating utilizing the following essential components:
1. An epoxy functional resin component where the average epoxide functionality is
   >1.
2. An aliphatic amine or aliphatic blocked amine functional component where the
   amine functionality is >1. This includes polyamidoamines, polyamines, ketimines
   and aldimines.
3. An acetoacetonate functional oligomer where the molecular weight is < 1000 and
   the acetoacetonate functionality is ≥ 1.
4. Optionally other components that typically constitute a complete coatings system
   such as pigments, catalysts, additives, plasticizers, etc.
This is typically a three-package system however, with modification, it can become a two-package system.
The low molecular weight polyacetoacetonate component can be prepared by various methods, the preferred method being transesterification of a polyol, such as ethylene glycol or preferably glycerine, with t-butylacetoacetonate, and then distilling off t-butanol as a by-product.

Finding utility in the instant coatings are flow and rheology modifying agents which include but are not limited to synthetic amorphous hydrophobic silica such as Degussa Aerosil ® R972, synthetic amorphous hydrophilic silica Degussa Aerosil ®200, organo clays, polyethylene wax dispersions, polypropylene wax dispersions, polyamid wax dispersions, ethylene vinyl acetate wax dispersions. Agents such as Byk Anti-terra ®202, Byk Anti-terra ® 204, Byk Anti-terra ® V, Byk ® W-960, Byk ® R-405, Byk ® -P104, Byk ® P-104s; Troy Chemical Troythix Antisag ® 4, Troy Chemical Troythix Antisettle ®; Raybo Chemical Raybo ® 6, Raybo Chemical Raybo ® 94, and Tego Chemie ZFS ® 460.

Also finding utility are pigment wetting and dispersing aids which include but are not limited to ICI Solsperse hyperdispersants such as Solsperse ® 5000, Solsperse ® 12000, Solsperse ® 22000 and Solsperse ® 24000; Troy Chemical Troysol ® CD1, Troy Chemical Troysol ® CD2 and Troy Chemical Troysol ® 98C; Daniel Products DispersAyd ® 9100; Raybo Chemical Raybo ® 63; Byk Anti-terra ® U, Byk Anti terra ® 202, Byk ® W-960, Byk ® p104, Disperbyk ® 160, Disperbyk ® 162, Disperbyk ® 163; Nuodex Nuosperse ® 657; Nuodex Nuosperse ® 700. Also finding utility in these coatings are ultraviolet light absorbers and stabilizers which include but are not limited to Sandoz Chemicals Sanduvor ® 3206, Sanduvor ® VSU, Sanduvor ® 3050; Ciba Geigy Corp. Tinuvin ® 123, Tinuvin ® 292, Tinuvin ® 328, Tinuvin ® 440, Tinuvin ® 900, Tinuvin ® 1130.

Also finding utility in these coatings are various types pigments common to the art which include but are not limited to titanium dioxide, graphite, carbon black, zinc oxide, cadmium sulfide, chromium oxide, zinc sulfide, zinc chromate, strontium chromate, barium chromate, lead chromate, lead cyanamide, lead silico chromate, chromium oxide, zinc sulfide, yellow nickel titanium, yellow chromium titanium, red iron oxide, transparent red iron oxide, yellow iron oxides, transparent yellow oxide, black iron oxide, naphthol reds and browns, anthraquinones, dioxazine violet, isoindoline yellows, arylide yellow and oranges, ultramarine blue, phthalocyanine complexes, amaranth, quinacridones, halogenated thioindigo pigments, extender pigments such as magnesium silicate, aluminum silicate, calcium silicate, calcium carbonate, fumed silica, barium sulfate.

The coating composition can be applied using conventional spray equipment or high volume pressure spray equipment resulting in a high quality finish. Other modes of application are roller coating, brushing, sprinkling, flow coating, dipping, electrostatic spraying, or electrophoresis. Exemplary metal substrates include such things as steel, aluminum, copper, zinc, magnesium and alloys thereof. Exemplary non-metallic substrates include such things as the rigid and non-rigid plastics common to the art. The components of the compositions can be varied to and non-rigid plastics common to the art. The components of the compositions can be varied to suit the temperature tolerance of the substrate material. For example, the components can be constituted for ambient or room temperature drying (e.g. less than 37,7°C/100°F), force drying or low temperature baking (e.g. 37,7°C/100°F-82,22°C/180°F.), or high temperature baking (e.g. over 82,22°C/180°F.). The coatings may be formulated to meet the requirements of the equipment intended for use during application.

The pigments can be introduced by first forming a mill base with the active hydrogen functional resin utilized in the composition or with other compatible polymers by conventional techniques, such as sand-grinding, ball-milling attritor grinding, two roll milling and the like, to disperse the pigments. The mill base is then blended with other film forming constituents as shown in the examples which follow:

Coating compositions described by the present invention find utility in applications of ambient or room temperature drying (e.g. less than 37,7°C/100°F), force drying or low temperature baking (e.g. 37,7°C/100°F. - 82,22°C/180°F.), or high temperature baking (e.g. over 180°F.). The coating cure process for the present invention may also be accelerated by the utilization of radiant heating or Infra Red emitting devices known to the art.

The following examples are intended to illustrate the invention. All quantities are shown on a weight bases unless otherwise indicated.

### Example 1

### Preparation of Acetoacetate-Functional Oligomer (EGDAA) from Ethylene Glycol

A 2-liter, 3-necked flask was fitted with a heating mantle, stirrer, thermocouple, N₂ inlet, distillation head with thermometer, condenser and receiver. The flask was charged with 173.9 grams of ethylene glycol and 930.2 grams of tert-butyl acetoacetate. It was heated slowly to 140°C under a N₂ gas purge. When the temperature reached about 140°C, distillation of byproduct t-butanol was initiated at a head temperature of about 90°C. The reaction temperature was slowly increased in stages to 180°C, at which point 98% of the calculated amount of t-butanol byproduct had been removed. Yield of ethylene glycol diacetoacetate (EGDAA) was 680 grams. The product was a light-colored liquid with 18 cps Brookfield viscosity and having molecular weight of 230 and an acetoacetate equivalent weight of 115.1.

### Example 2

### Preparation of Acetoacetate-Functional Oligomer from Glycerol (GTAA)

Into a 2-liter, 3-necked flask set up as described in the previous example was charged 138.1 grams of glycerol and 759.4 grams of t-butylacetoacetate. Under a nitrogen flow the flask was heated in stages to 175° C. Distillation of byproduct t-butanol began at a head temperature of 95°C and was completed when about 97% of the theoretical amount of t-butanol was collected. Yield of approximately 98% pure glycerol triacetoacetate (GTAA) was 537 grams. The product was a light-colored mobile liquid with a viscosity of 85 -90 cps (Brookfield), a molecular weight of approximately 344 and an acetoacetate equivalent weight of 114.8. Low molecular weight acetoacetyl derivatives of pentaerythritol, trimethylol propane, Tone® 301 and several other low molecular weight polyols were made by similar procedures. All were low-viscosity light-colored liquids with molecular weights below 1000.

### Example 3

### Low VOC Coatings from Epoxy Resins, Low Molecular Weight Acetoacetates, Aldimines and Other Ingredients

Primer coating compositions were formulated from DE15, which is a standard BASF epoxy-resin primer base that also contains pigment and some additives in addition to the epoxy resin; AEP (aminoethylpiperazine), which is a standard epoxy curing agent (the control used PA16, a polyamidoamine hardener); and PR70, which is a standard BASF toluene/butyl acetate reducer. The experimental coatings were modified with varying amounts of low molecular weight acetoacetate reactive diluents and an aldehyde blocked amine (aldimine) curing agent for the acetoacetate. In the experimental resins some of the PR70 reducer was replaced by methyl ethyl ketone, which stabilizes the aldimine hardener. The table below shows a representative sample of such coatings compared with an epoxy primer control that does not incorporate the acetoacetate-blocked amine reactive reducer modification. The table also shows VOC results and other important system properties.

| Ingredient (grams) | Coating A (control) | Exper. Coating B | Exper. Coating C | Exper. Coating D |
|---|---|---|---|---|
| DE15 | 252.0 | 252.0 | 252.0 | 252.0 |
| GTAA | 0 | 36.0 | 22.5 | 27.0 |
| EGDAA | 0 | 0 | 10.0 | 11.4 |
| PR70 | 33.0 | 18.0 | 18.0 | 15.0 |
| MEK* | 0 | 19.5 | 19.5 | 19.5 |
| PA16 hardener | 67.0 | 0 | 0 | 0 |
| AEP | 0 | 4.5 | 4.8 | 4.8 |
| CE4072 Aldimine | 0 | 44.8 | 17.5 | 23.6 |

| Properties: | | | | |
|---|---|---|---|---|
| Visc. (#4Cup) | 17.5 sec | 18 sec | 19.5sec | 19.5sec |
| Wt.(lb. per gal.) | 11.1 | 11.1 | 11.6 | 11.6 |
| VOC(lb. per gal) | 4.7 | 3.1 | 3.48 | 3.24 |

| | | | | |
|---|---|---|---|---|
| *Methyl ethyl ketone | | | | |

Pot life for all compositions was at least one hour. Coatings were drawn down over bare steel plates or sprayed on to these plates and compared for dust-free and tack-free times. The experimental compositions were dust-free in less than 30 minutes and tack-free in less than two hours. As primers, all systems could be overcoated with white basecoats in 30 minutes and demonstrated enough holdout of the basecoat to prevent any dieback of the white basecoats.

Note that all the experimental primer coatings have at least a 25% lower volatile organic content (VOC) than the control, while retaining adequate performance as a primer coating..

The low molecular weight (<1000) of these acetoacetates results in the low viscosity properties that allow for incorporation as reactive diluents or reducers. Higher molecular weight acetoacetate-functional compounds would not have given the low viscosities that would permit practical use as modifiers for epoxy coating systems.

## Claims

1. A low VOC coating composition comprising:
(a) An epoxy functional resin component where the average epoxide functionality is >1,
(b) An aliphatic amine or aliphatic blocked amine functional component where the amine functionality > 1, and
(c) An acetoacetonate functional oligomer where the molecular weight is <1000 and the acetoacetonate functionality is ≥ 1.

2. A low VOC coating composition additionally comprising:
(d) Other components that typically constitute a complete coatings system.

3. The coating composition of claim 1 or 2 wherein the amine component is selected from the group consisting of polyamidoamine, polyamine, ketimine and aldimine.

4. The coating composition of anyone of the claims 1 to 3 that additionally contains a pigment, a catalyst, and/or a plasticizer.
